# EUROPEAN PATENT APPLICATION

(11) **EP 4 552 776 A1**
(43) Date of publication of application: **14.05.2025**
(21) Application number: 24211312.4
(22) Date of filing: 07.11.2024
(51) Int. Cl.: B23D 47/02, B23D 47/04, B27B 5/065

(54) **CUTTING MACHINE AND RELATED OPERATING METHOD**

(30) Priority: 09.11.2023 IT 202300023613
(71) Applicant: Naldi, Valter, 40137 Bologna (IT)
(72) Inventor: Naldi, Valter, 40137 Bologna (IT)

(57) **Abstract**

A cutting machine (1) for cutting panels (P) made of wood or the like. The work area (AL) comprises at least a pneumatic mean (30). The same pneumatic mean (30) is configured to operate selectively in a "air cushion" operating mode or in a "pneumatic vacuum holding" operating mode on at least one panel (P), so as to temporarily lock the panel (P) in position on the work area (AL), while waiting for its following movement, cut or discharge. The cutting machine (1) entails the use of a robotic manipulator (10). The invention relates also to an innovative method for a panel cutting machine.

## Description

### TECHNICAL FIELD

The invention relates to a cutting machine and to a relative cutting method for cutting panels with a flat shape.

### PRIOR ART

In the industry dealing with the processing of panels made of wood, polymers, composite materials, fibre-cement or the like, a cutting machine is known, which comprises a support frame defining a substantially horizontal support and/or feeding plane for at least one panel made of wood or the like; a cutting station; a main pushing device for moving at least one first panel forward and, if necessary, backward in a first direction through the cutting station; a secondary pushing device for moving at least one second panel forward and, if necessary, backward in the first direction through the cutting station; and a cutting device consisting of a saw carriage mounted in the cutting station so as to move in a second direction and along a cutting plane perpendicular to the first direction in order to cut the panels.

The feeding plane generally consists of a roller device mounted upstream of the cutting station, whereas the output table, located downstream of the cutting station, generally consists of one or more air cushion planes to facilitate the handling and unloading of the panels being processed.

In addition, the continuous application and implementation of automation in production processes led to the integration, in some cutting machines, of a robotic manipulator mounted downstream of the cutting station or of the output table to retrieve the components cut from the original panels by means of the cutting device and definitively unload them from the cutting machine or feed them again to the main pushing device and/or to the secondary pushing device for the execution of further cuts by means of the same cutting station.

A trapdoor for the automatic unloading of swarf is provided between the cutting station and the output table.

The robotic manipulator comprises a base, a system of articulated arms connected to one another and to the base and a panel pick-up unit coupled to the articulated arms.

The panel pick-up unit comprises a frame coupled to the telescopic arms in a rotary manner and supports one or more movable arms provided with respective suction cups connected to a suction device.

However, known cutting machines of the type described above suffer from some drawbacks deriving from the fact that the robotic manipulator with the suction cup gripping system can move one single panel at a time and, because of this, only one panel can be cut in each cutting cycle; and all of this despite the fact that cutting machines of the type described above can effectively cut several overlapping panels, when they must be cut with the same cutting scheme.

It should be noted here that "just-in-time" production, which is prevalent in modern industry, requires low and medium production volumes, which, as far as the production of the various components is concerned, requires the cutting of one, or at most three or four panels, for each different cutting scheme.

Recent studies carried out on the production of a large audience of users of cutting machines showed a typical production consisting of a percentage of cutting schemes with one single panel equal to thirty-eight percent, cutting schemes with two panels equal to thirty-six percent, cutting schemes with three panels equal to fourteen percent and cutting schemes with four panels equal to twelve percent.

This type of production applied to cutting machines with robotic manipulator for panel handling and unloading has encouraged studies on the implementation, in the aforementioned robotic manipulators, of handling systems by means of panel pushing members, without prejudice to the unloading system of the panels carried out individually by means of the suction cups of the same robotic manipulator. The unloading by means of the suction cups is also determined, in addition to other factors, by the need to form stable mixed stacks of panels of various sizes on the unloading pallets, placing the panels side by side and on top of one another according to their size and to the size of the pallets.

To this regard, patents EP3533572B1 filed by Homag Plattenaufteiltechnik GmbH and EP3647004B1 filed by Biesse SPA disclose a particular gripping frame, which, in addition to the gripping system with the suction cups, is provided with a system of movable poles that cooperate with one another to laterally lock a stack of panels, moving it to the various work areas of the cutting machine, without prejudice to the fact that the unloading of the cut panels from the plane downstream of the cutting station is entrusted to the suction cup system capable of picking up one single panel at a time or several panels at a time as long as they are side by side.

The problem with these solutions lies in the fact that the adhesion between panels with smooth and/or glossy surfaces is very high and this means that the detachment of the lifted panel from the one below is never guaranteed, even if the lifting times are greatly extended. In fact, this problem inhibits the use of these solutions as it can happen that the accidental lifting and the consequent falling of the underlying panel in a position different from its original one causes continuous stops of the machine with very significant production losses.

Given the unreliability of these mixed systems, in which stacks of panels are moved together, but one single panel is picked up with suction cups, solutions such as those described in patents EP4005715B1 filed by SCM Group and EP4032671B1 filed by SCM Group have been devised, which disclose hybrid machines that are designed, or in any case suited, to use the robotic manipulator only when applying cutting schemes with one single panel, then returning to the traditional cutting with an operator for moving and unloading the panels when cutting schemes must be carried out which entail the cutting of several panels for each cutting cycle.

The alternative for machines with robotic manipulators is to always cut one single panel at a time, even when the cutting schemes would allow for the cutting of a stack of panels, but in doing so the advantage caused by automation is outweighed by low productivity.

### DESCRIPTION OF THE INVENTION

Therefore, one of the objects of the invention is to provide a cutting machine with a panel support plane that has the particularity of being able to hold the panel or panels supported by it, in order to avoid uncontrolled movements of the panels when they are parked in the different work areas of the cutting machine and are waiting to be moved.

A further object of the invention is to move the panels being processed, when they are one top of one another, quickly and reliably by means of a robotic manipulator.

Hence, the invention relates to a cutting machine in which the action of pneumatically holding at least one lower panel of a stack of panels takes place in combination with the action of handling at least one upper panel of the same stack by means of the robotic manipulator.

The invention relates to a panel cutting machine according to the independent claim attached hereto and, preferably, according to any one of the dependent claims directly or indirectly depending on the aforesaid independent claim.

The invention will therefore be described, by way of explanation, but not by way of limitation, according to its preferred embodiments, but it is to be understood that variations and/or modifications can be made by people skilled in the art without for this reason going beyond the scope of protection, as defined by the appended claims.

### BRIEF DESCRIPTION OF THE DRAWINGS

The invention will be best understood upon perusal of the following description of some preferred embodiments, with reference to the following accompanying drawings:
- figure 1 schematically shows a plan view of a cutting machine according to the invention; said cutting machine is provided with a robotic manipulator;
- figure 2 shows a side view from the right of the cutting machine of figure 1, highlighting a function of transferring and positioning first panels produced in a cutting station, which, in this case, is carried out by means of a robotic manipulator;
- figure 3 shows a plan view of an embodiment of a panel supporting and moving plane of the cutting machine;
- figure 4 shows a side view of the plane of figure 3;
- figure 5 shows a plan view of the cutting machine with the robotic manipulator in operation; this robotic manipulator, after having picked up the longitudinal strips that were just cut in the cutting station, rotates these longitudinal strips in order to move them from a parking zone to a transversal cutting zone and against a reference square;
- figure 6 shows a front view of the transverse cutting zone of the cutting machine while positioning the strips against the reference square;
- figure 7 shows a side view of the cutting machine while the robotic manipulator picks up and lifts a cut panel; and
- figure 8 shows a plan view of the cutting machine while the robotic manipulator picks up and unloads cut panels.

### PREFERRED EMBODIMENTS OF THE INVENTION

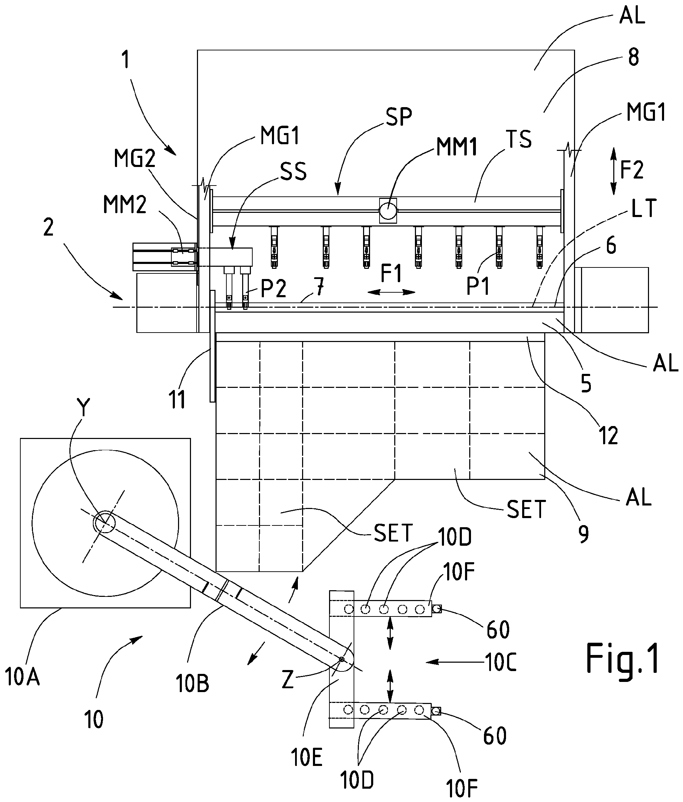

In the embodiment described herein, with reference to figures 1 to 8, number 1 indicates the cutting machine for panels (P) according to the invention.

For the purposes of this disclosure, the terms "panel" (P), "strip" (STR), etc. must all be considered as synonymous and as substantially flat elements (for example, panels of various sizes for the construction of furniture, panels of plastic material or relative strips, etc.) suited to be cut by means of the cutting machine 1 according to the invention or panels resulting from the cutting carried out by means of the same cutting machine 1.

Furthermore, in this description, the term "stack" is to be understood as a vertically stacked set of two or more panels (P) or strips (STR).

The cutting machine 1 is provided with an electronic control unit (numerical control or electronic system) (not shown), which is intended to control and manage a plurality of components of the cutting machine 1, which are better identified below.

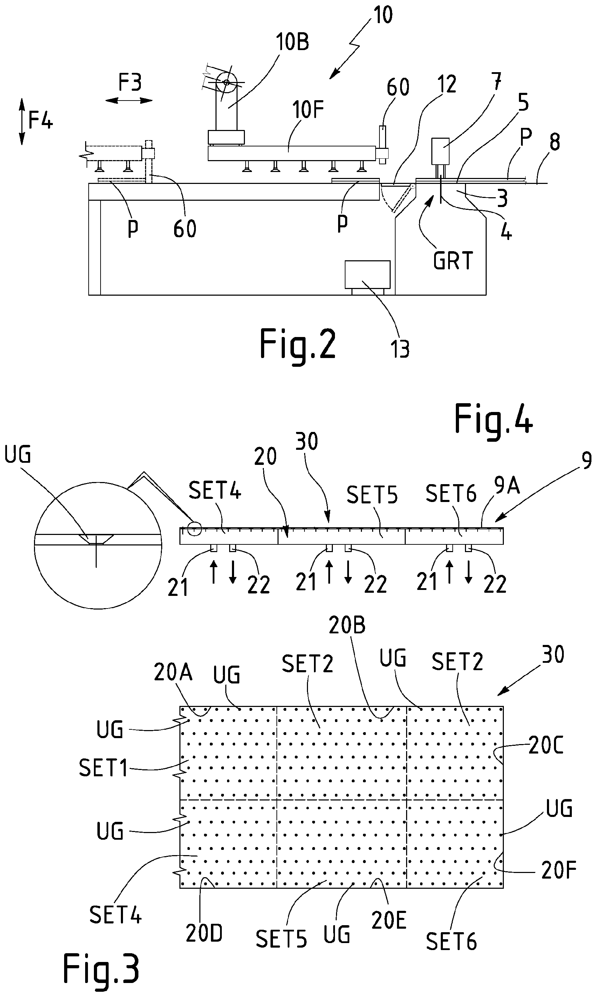

The cutting machine 1 is of the horizontal type with a cutting station 2 of the type with a cutting assembly (GRT) with a movable tool-holder carriage (figure 2), which can slide and is operated in a known manner along a base 3 (figure 2) according to directions and ways defined by an arrow (F1) (figure 1) identifying a direction substantially transverse to the feeding direction of the panels (P) along the cutting machine 1. However, in other embodiments, two or more cutting stations (2) can be present.

During the active cutting step, the tool or tools (one single cutting blade 4, mounted on the cutting assembly (GRT), is visible in figure 2, whereas the possible scorer is not shown) are lifted (or lowered in a different machine type) above a base work plane 5 (figures 1 and 2) along the base 3, while they are lowered (or lifted in a different machine type) during the step of returning to the start-of-cut position.

As it is known, in some cutting machines there generally are two cutting tools, a cutting tool (cutting blade 4) and a scorer tool (not shown), and during the cutting step they both slide within a cutting slit 6 (figure 1) obtained in the base work plane 5, whose middle line is generally defined as cutting line (LT) (figure 1).

As shown in the non-limiting example of figure 2, a known upper pressing member 7 is configured, during the cutting step, to lock the panels (P) on the base work plane 5 by means of a known vertical movement.

During the positioning of the panels (P), before the cut, the upper pressing device 7 always is in a lifted position.

In a known manner, the cutting machine 1 is provided with a main pushing device (SP), in the form of an overhead crane, provided with a first plurality of grippers (P1) and possibly with a secondary pushing device (SS) equipped with a second plurality of grippers (P2) (figure 1).

The cutting machine 1 for panels (P) normally comprises a feeding plane 8 located upstream of the cutting station 2 (figures 1, 2). Said feeding plane 8 can be, for example, of the roller type (but, alternatively, it could also be of a different nature) and can be provided with optional rotation means (not shown) for rotating the panels (P) and/or portions thereof in order to obtain the orientation needed to carry out the various cuts to size entailed in the cutting scheme to be performed.

In other words, this preliminary orientation before the cuts is carried out, with known means that are not shown herein, upstream of the cutting station 2 on the feeding plane 8.

Therefore, the work area (AL) (figure 1) of the cutting machine 1 comprises, in sequence, the aforementioned feeding plane 8, the aforementioned base work plane 5 and continues past the base work plane 5 in the form of one or more support planes 9; the feeding plane 8, the base work plane 5 and the support plane 9 preferably are all arranged at the same level, but not necessarily.

In addition, the work area (AL) could also comprise at least one complementary support or temporary parking plane (not shown in the accompanying figures) for the panels (P) or for the strips (STR) that require a further processing step. This complementary support or temporary parking plane (not shown in the accompanying figures) could also be external to the cutting machine 1.

Said at least one complementary support or temporary parking plane (not shown in the accompanying figures) can be arranged at the same level as the feeding plane 8 and/or the base work plane 5 and/or at least one support plane 9 or be at a different level than one or all of said feeding and moving plane 8, base work plane 5 or support plane 9.

The support plane (or planes) 9 downstream of the cutting station 2 is intended to support the panels (P) and/or the strips (STR) and any other cut portions exiting the cutting station (2) and have them slide, so as to allow for their correct orientation and possible reinsertion in the cutting machine 1, for example by means of a robotic manipulator 10 configured to grip at least one element chosen from a panel (P), a strip (STR) or another laminar component and transport it onto the entire aforementioned support plane 9 (figures 1, 2, 5, 6, 7, 8) (see below).

In a known manner, the main pushing device (SP) and the secondary pushing device (SS), by means of the relative grippers (P1), (P2), are configured to pick up the various elements to be cut (panels (P), strips (STR), etc.) from the feeding plane 8 (or from the support plane 9) and to position them, according to the set program, on the cutting line (LT) where the cutting of said elements takes place by means of the cutting station 2 and, in particular, by means of the blade 4.

The operating field of the main pushing device (SP) extends above the feeding plane 8, which, therefore, has a width almost coinciding with that of the cutting line (LT) and a length almost coinciding with the usable stroke of the main pushing device (SP) determined by the rear limit stop in its retracted position (not shown) and by the cutting line (LT) in its advanced position.

However, in some cutting machines, the rear limit stop of the main pushing device (SP) can be extended to allow the panels (P) to be automatically loaded from an area behind the feeding plane 8 and the front limit stop can be extended beyond the cutting line (LT) and up to and/or near the support plane 9.

In the embodiment shown herein, on the main pushing device (SP) and, in particular, on a cross member (TS) thereof (figure 1), there are fixed the aforementioned grippers (P1) for locking and transporting the panels (P) and/or the strips (STR) to be cut to size.

The secondary pushing device (SS) (figure 1) has a usable stroke almost identical to that of the main pushing device (SP) and has at least one end that is forced to slide along respective second guiding means (MG2) (figure 1) parallel to the first guiding means (MG1) of the main pushing device (SP).

Furthermore, the main pushing device (SP) is operated, along the first guiding means (MG1), by first longitudinal driving means (MM1) of the known type (figure 1), whereas the secondary pushing device (SS) is operated along the second guiding means (MG2) by second longitudinal driving means (MM2) of the known type (figure 1).

In the solution shown herein, the secondary pushing device (SS) and the main pushing device (SP) are located and operate at different heights with respect to the work area (AL) in order to avoid mutual interference and permit the respective independent movements along the same work area (AL).

In a known manner, therefore, the pushing devices (SP) and (SS) can move horizontally according to the direction and the ways identified by an arrow (F2) (figure 1) substantially perpendicular to the cutting line (LT) and, hence, to the aforementioned arrow (F1) according to a direction substantially parallel to the feeding direction of the panels in the cutting machine (1).

As shown in figures 1, 5, 6, 8, in the area generally used for the transverse cutting of the strips (STR) or of the panels (P) (left part of the drawings), a reference square 11 is provided so that the strips (STR) or the panels (P) can stroke against it in order to be subsequently cut transversely at 90 degrees.

According to figure 2, a trapdoor 12 for unloading the trimming residues is located between the base work plane 5 and the support plane 9.

The trapdoor 12 (figure 2) is therefore located downstream of the cutting station 2 with respect to the normal flow of the panels (P) (and/or of the strips (STR)).

This trapdoor 12 is used to automatically unload, in a known manner and under the work area (AL), the swarf (trimming residues) that is generated in the area of the cutting station 2.

A container 13 for collecting swarf (trimming residues) is located under the unloading trapdoor 12 (figure 2).

Alternatively, a conveyor belt (not shown) can be provided for the automatic removal of swarf.

As already mentioned above, the cutting machine 1 according to the invention is provided with the robotic manipulator 10 located downstream of the feeding plane 8 and of the cutting station 2 for picking up and positioning, for example, strips (STR) and/or panels (P) generated (starting from the original panels (P) and/or from the strips (STR)) in the cutting station 2 on at least the entire support plane 9.

In a known manner, the robotic manipulator 10 is controlled by the electronic control unit of the cutting machine 1, but it could also be controlled by a control and management unit of its own (not shown), which is configured to communicate (exchange data) with the electronic control unit of the cutting machine 1 (for instance, according to a "master-slave" operating mode).

Therefore, the electronic control unit is configured to operatively manage all the parts of the cutting machine 1 and, hence, all its operational phases, directly or indirectly including those of the robotic manipulator 10.

The robotic manipulator 10, depending on its articulated arm, can also be placed in a position different from that shown in the accompanying figures, in order to have access to different zones of the work area (AL) of the cutting machine 1.

In the non-limiting solution shown in the attached figures, the robotic manipulator 10 is located externally and next to the support plane 9 downstream of the cutting station 2 and beside the reference square 11.

The robotic manipulator 10 is configured to move the cut panels (P) and/or strips (STR) or stacks of strips (STR) away from the zone immediately downstream of the cutting station 2, placing them in a parking zone on the support plane 9 (see below).

Furthermore, the robotic manipulator 10 is configured to feed the cut strips (STR) and/or the cut panels (P) again to the main pushing device (SP) and/or to the secondary pushing device (SS) for the execution of further transverse cuts (see below).

The robotic manipulator 10 is configured to unload the cut panels (P) onto dedicated components such as boards, pads, pallets (PPL) (figure 10) and/or onto roller tracks (not shown) for their manual or automatic removal.

In a known manner, the robotic manipulator 10 (figures 1, 5, 6, 7, 8) comprises a base 10A, a system of articulated arms 10B connected to one another and to the base 10A and a pick-up unit 10C fixed to the articulated arms 10B.

In a known manner, the robotic manipulator 10 could consist of a manipulator member with Cartesian axes movements.

The robotic manipulator 10, which acts as a pick-up unit, can rotate around a relative axis (Y).

Advantageously, though not necessarily, the pick-up unit 10C of the robotic manipulator 10 comprises a plurality of suction cups 10D, which, in a known manner, are configured to adhere to an upper surface of at least one panel (P) or of a strip (STR). The panels (P) (or the strips (STR)) to be moved by the robotic manipulator 10 are gripped by means of the suction cups 10D.

In particular, the pick-up unit 10C (figure 1) comprises a cross member 10E hinged, in a known manner, to the articulated arms 10B in the area of an axis (Z) and two arms 10F on which the aforementioned suction cups 10D are mounted. These arms 10F, by means of known means, can be moved towards/away from one another, sliding on the cross member 10E, in order to adjust the pick-up system according to the dimensions of the strips (STR) or of the panels (P) to be handled.

At the ends of the two arms 10F there are mounted two poles 60 (figures 1, 2) for the transferring the panels (P) (or the strips (STR)) to and placing them in a special parking zone on the support plane 9 when necessary, namely when other strips (STR) and/or panels (P) engage the transverse zone along the reference square 11.

These poles 60, in the rest position, are located above the support plane 9 and above the height of the maximum stack of panels that can be cut with the cutting machine 1 and, by means of known means which are not shown herein, can translate vertically according to a direction and ways identified by an arrow (F4) (figures 2, 6, 7) until they reach the vicinity of the support plane 9.

Therefore, when needed, the two poles 60 can be lifted so as not to interfere with the panels (P) or the strips (STR) on the support plane 9 or, on the contrary, they can be lowered (according to the arrow (F4) in a substantially vertical direction onto the support plane 9 in order to be able to push one or more strips or stacks of strips (STR) at a time, according to the arrow (F3) arranged along a direction substantially parallel to that of the arrow (F2), and place them in a parking zone, on the support plane 9, when their immediate transverse cutting is not possible. Both situations are shown in figure 2.

In other words, the handling of the strips (STR) and their precise positioning along the support plane 9 can be carried out by means of the aforementioned poles 60 of the robotic manipulator 10 according to a direction and ways identified by the arrow (F3) (figure 2) perpendicular to the cutting line (LT).

As already mentioned above, one of the objects of the invention is to provide a cutting machine 1 with a work area (AL) that has the particularity of being able to temporarily hold the panels (P) (or the strips (STR)) resting on it, when they are waiting to be moved and in order to prevent them from moving in an uncontrolled manner.

For this purpose, figures 3 and 4 show a solution when the work area (AL) is an air-cushion plane.

As it is known, an "air cushion plane" uses the air jets coming out of a series of nozzles (UG) (figure 4) to slightly lift the panels (P) during their movement along the cutting machine 1. The nozzles (UG) are integrated into the work area (AL) and in particular, in this case, in the support plane 9 out of the cutting station 2, as shown in figure 4.

This forbids a direct contact between the lower surfaces of the panels (P) and the surface 9A of the support plane 9 (figure 4). All of this to prevent the direct rubbing between the lower surface of the panel (P) and the surface 9A of the support plane 9 (or of the work area (AL)) from causing scratches and damages of various kinds on the lower surface of the panel (P) itself. In fact, everything must be done to guarantee, as much as possible, the integrity of the lower surface of the panel (P) during the entire movement along the cutting machine 1. In fact, if damaged by the handling and cutting operations, the panel (P) or the strip (STR) should then be rejected, with a significant economic loss for the manufacturer.

As a matter of fact, precisely for these reasons, it should be noted here that the adoption of air cushion planes is extended to almost all cutting machines of the type covered by this document and, in particular, also to the area of the feeding planes 8 and to the base work plane 5 thereof.

In addition, the "air cushion" created by the nozzles (UG), interposed between the lower surfaces of the panels (P) and the surface 9A of the support plane 9 (as shown in figure 4), facilitate the translation and free sliding of the panels (P) with the means specially designed for this purpose.

In a known manner and as shown in the enlargement of figure 4, each nozzle (UG) can have a shape that is flared towards the outside so as to have as much output pressure energy as possible to validly support the panels (P).

In some solutions, a mechanical ball valve is located in the area of the nozzles and determines the opening thereof when pressed by the weight exerted by the overlying panels (P).

In the accompanying figures, the support plane 9 is therefore equipped with a closed case 20 supplied with an air flow with an adequate head, normally generated by a fan or by an air generator (known and not shown), through at least one supply duct 21. The closed case 20 is also provided (in the solution shown in figure 4 with at least one further duct 22 (which will be fully described below). The closed case 20 is located under the support plane 9 and is integral to it. The nozzles (UG) are pneumatically connected to the closed case 20.

Optionally, the pre-existence of the closed case 20 can be exploited and the plurality of nozzles (UG) can be used for obtaining of a pneumatic apparatus 30. In order to do this, the duct 22 simply needs to be connected to a special vacuum generator (not shown) in order to perform the "pneumatic vacuum holding" action by closing the duct 21 accordingly. The vacuum thus propagates to all the nozzles (UG) of the case 20.

The ducts 21 and 22 are provided with valves (not shown) that permit a switch from the "air cushion" mode, in which air flows out of the case 20, to the "pneumatic vacuum holding" mode, in which air flows into the case 20, and vice versa.

For example, if one wants to switch to the "pneumatic vacuum holding" mode, a dedicated valve (not shown) closes the duct 21, causing the duct 22 and the plurality of nozzles (UG) to generate a suction.

Alternatively, one single duct 21 leading to the case 20 can be provided, wherein the separation of the flows with the relative valves takes place downstream of and close to the air and vacuum generator.

In a further alternative, one single duct 21 can be provided using a suitable reversible fan or air generator, namely capable, by means of opposite rotations, of generating both the out-flowing air flow to create the air cushion and at the in-flowing air flow to create a suction and, hence, a pneumatic vacuum in the case 20.

This pneumatic vacuum is used to lock the lower surface of the panel (P) (or of the strip (STR)) while waiting for a subsequent movement or processing and, hence, ultimately, to hold the entire panel (P) or part of it resting on the relative zone of the work area (AL) above the case 20.

In order to increase the flexibility of the system, it is optionally possible to divide the support plane 9 into a plurality of pneumatic devices (SET), (SET1), (SET2), (SET3), (SET4), (SETS), (SET6) (figures 1, 3, 4, 5, 6, 7, 8) pneumatically sealed with respect to each other and each having a respective closed case 20, 20A, 20B, 20C, 20D, 20E, 20F, with which respective ducts of the type 21 and 22 are associated.

Basically, this pneumatic apparatus 30 comprises at least one pneumatic device (SET), (SET1), (SET2), (SET3), (SET4), (SETS), (SET6) pneumatically connected to a dedicated vacuum generator (not shown).

In other words, each pneumatic device (SET), (SET1), (SET2), (SET3), (SET4), (SETS), (SET6) of the pneumatic apparatus 30 has a holding surface, which assumes the shape of a sector of the support plane 9.

It is important to highlight the fact that, since the closed cases 20, 20A, 20B, 20C, 20D, 20E, 20F are each independent of one another from the pneumatic point of view, they can each be configured to operate, selectively (or in groups), indifferently and independently of one another, as devices for creating an "air cushion" or as "pneumatic vacuum holding" devices; this depends, of course, on how each closed case 20, 20A, 20B, 20C, 20D, 20E, 20F pneumatically relates to the respective ducts of the type 21, 22.

The electronic control unit of the cutting machine 1 is configured to decide (selectively or in groups), instant by instant, which closed cases 20, 20A, 20B, 20C, 20D, 20E, 20F must operate in "air cushion" mode and which, on the other hand, in "pneumatic vacuum holding" mode according to the various operations that the cutting machine 1 must perform on the panels (P) (or on the strips (STR)) based on the cutting and/or unloading cycle in progress (see below).

The "pneumatic vacuum holding" mode is particularly useful when there is a stack of at least two panels (P) coming out of the cutting station 2.

Actually, it is possible to use the "pneumatic vacuum holding" even with stacks of several panels depending on their thickness, on their degree of porosity and also depending on the degree of holding applied, since it is possible, with modern vacuum creation systems, to vary their power level by means of electronic signals.

In this case, the lower panel (P) of the stack of panels (P) is kept locked by the pneumatic apparatus 30, while the upper panel (P) of the same stack of panels (P) is picked up and moved by the robotic manipulator 10, which, in the meantime, in masked time, namely while the lower panel (P) is locked, basically substantially simultaneously, has laid and operated its suction cups 10D on the upper surface of the panel (P) located in the highest point of the stack.

In this way, it is ensured that the two panels (P), originally on top of one another in the same stack, following the aforementioned operations are completely detached from one another in a fast and reliable manner, thus solving the problems that would be caused by the unwanted adhesion between the panels (P). All of this with the purpose of obtaining a more precise and faster handling of the two panels (P) originally stacked on top of one another, without lifting and consequent unwanted displacements of the panels (P) located at the bottom, which have to wait and are not affected by the pick-up of the robotic manipulator 10.

The choice of the pneumatic devices (SET), (SET1), (SET2), (SET3), (SET4), (SETS), (SET6) of the pneumatic apparatus 30 to be activated (selectively or in groups) in "air cushion" mode or in "pneumatic vacuum holding" mode is made (selectively or in groups) by the electronic control unit (not shown) of the cutting machine 1 according to their position on the work area (AL) and/or according to the instantaneous position that the panel (P) or the strip (STR) to be held and/or handled occupies on the work area (AL) during the cutting cycle and, optionally, also according to the dimensions of the panel (P) or of the strip (STR) to be held and/or handled.

It should be pointed out that the electronic control unit is configured to manage and store, instant by instant, all the operating and waiting phases of the panels being processed on the work plane (AL) and, therefore, the dimensions of each single panel (P) or pack of panels (P), their exact position on the work area (AL) and, hence, also the phase or phases to which each single panel (P) or stack of panels (P) must be subjected in the relative cutting and/or processing cycle are known instant by instant.

Special sensors can make up for the detection of the data mentioned above, in the event that the electronic control unit is not able to automatically store it during the processing cycle.

For example, the electronic control unit can be set to activate the "air cushion" mode in those zones of the work area (AL) involved in the movement of the panels (P) and/or of the strips (STR) during their normal cutting cycle, while it is possible to simultaneously activate the "pneumatic vacuum holding" mode in other zones of the same work area (AL) where, on the other hand, the panels (P) and/or the strips (STR) are waiting and, therefore, are not involved in any movement and/or processing.

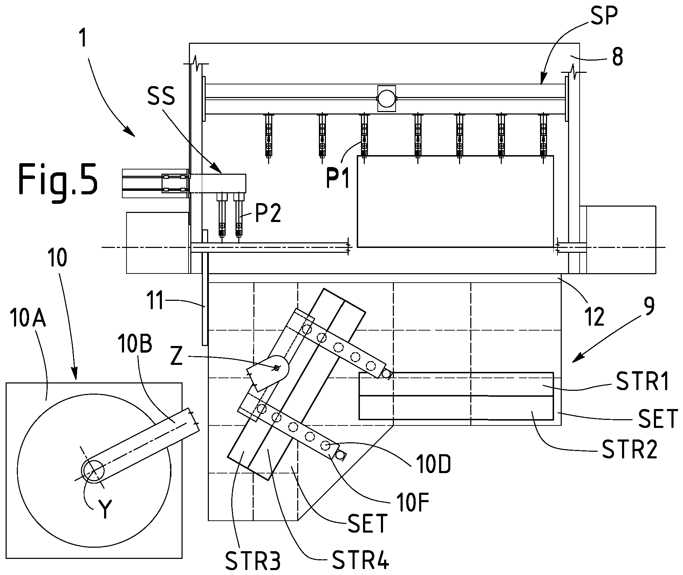

For clarity of description, it should be added that, as shown in figures 5, 6, 7, 8, the strips (STR) rotated by the robotic manipulator 10 are caused to strike against the reference square 11 and are immediately retrieved by the secondary pushing device (SS) by means of the second plurality of grippers (P2), they are completely retracted on the feeding plane 8 (according to arrow (F2)) and then they are advanced again in the opposite direction (again according to arrow (F2)), so that the assembly group (GRT) can make the transverse cuts by means of the cutting blade 4.

Figure 5 shows two strips (STR1) (STR2) (on the right of the drawing) parked at one end of the support plane 9, which are held by the action of "pneumatic vacuum holding" carried out by means of the relative pneumatic apparatus 30 below, and two identical strips (STR3) (STR4) (on the left of the drawing) (originally on top of the previous strips (STR1) (STR2) and cut simultaneously with them by means of the cutting station 2) during their movement from the parking zone (on the right of the drawing) to the transverse zone (on the left of the drawing) of the cutting machine 1, a movement carried out by means of the aforementioned robotic manipulator 10.

In particular, it should be noted that, precisely during the lifting of these two strips (STR3) (STR4) by means of the pick-up unit 10C of the robotic manipulator 10 using the movable arms 10F and the relative suction cups 10D, it is necessary to hold the two strips (STR1) (STR2) remaining on the support plane 9 so that they are not also lifted and/or moved due to the adhesion effect between the relative contact surfaces.

It is precisely at this stage that the "pneumatic vacuum holding" action of the pneumatic apparatus 30 carried out by means of at least one pneumatic device (SET), (SET1), (SET2), (SET3), (SET4), (SET5), (SET6) produces its effect of holding the sole lower strips (STR1) (STR2) lying on the support table. As a matter of fact, during this phase of holding the strips (STR1) (STR2), other zones of the same work area (AL) can be in "air cushion" mode or, in any case, in a free sliding mode to allow other panels (P) and/or strips (STR) to be moved during their simultaneous moving and/or processing cycle.

The two strips (STR3) (STR4), which were originally stacked on top of the strips (STR1) (STR2), respectively, in the parking area, are then quickly transferred, by means of the robotic manipulator 10, to the area of the cutting machine 1 used for transverse cuts (on the left of the drawing) and, in particular, are caused to strike against the reference square 11 and against the grippers (P2) of the secondary pushing device (SS).

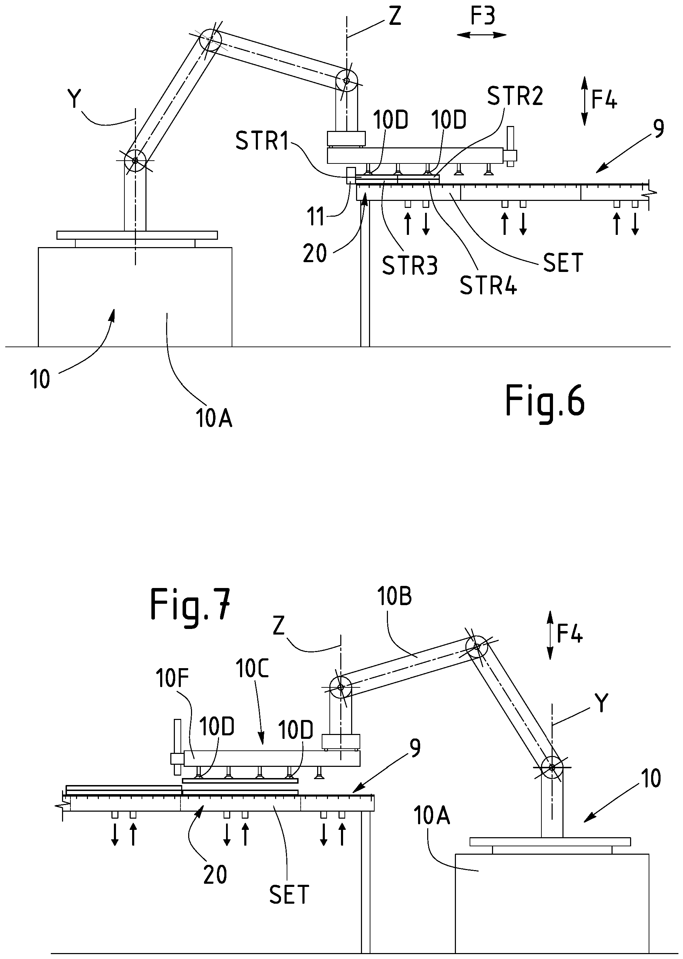

Figure 6 shows the subsequent positioning of the remaining two strips (STR1) (STR2) against the reference square 11 by means of the robotic manipulator 10. The strips (STR1) (STR2) are duly released during the relative lifting, thus interrupting the "pneumatic vacuum holding" action and restoring, if necessary, the "air cushion" in the closed cases 20, 20A, 20B, 20C, 20D, 20E, 20F below.

As shown in figure 6, again, the strip (STR1) is stacked on the relative strip (STR3), while the strip (STR2) is stacked on top of the respective strip (STR4).

A sort of reversal of the stacking order of the strips (STR1), (STR2) and (STR3), (STR4) has been achieved.

As a matter of fact, while at the beginning the strip (STR3) is stacked on the underlying strip (STR1) and the strip (STR4) is stacked on the underlying strip (STR2) (figure 7), at the end of the aforementioned movements the strip (STR1) is stacked on the underlying strip (STR3), while the strip (STR2) is stacked on the underlying strip (STR4) (figure 6).

The two strips (STR3) (STR4), which were previously positioned against the reference square 11, can also, if necessary, be held by means of the "pneumatic vacuum holding" action carried out, for example, by means of the pneumatic devices (SET), (SET1), (SET2), (SET3), (SET4), (SET5), (SET6) below, in order to prevent them from involuntary moving in an uncontrolled manner while the two subsequent strips (STR1) (STR2) are being placed on top of them (figure 6).

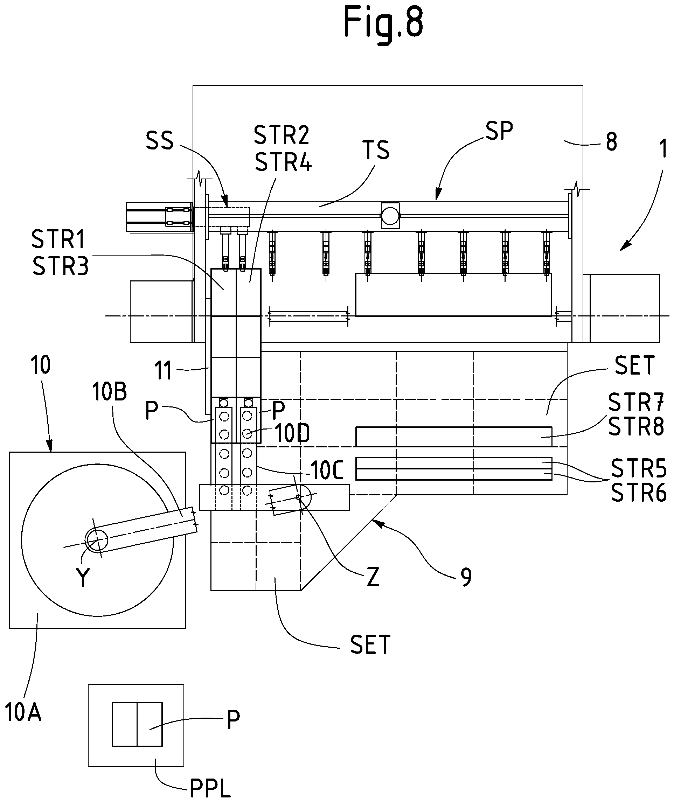

Figure 8 shows how the strips (STR1), (STR2), (STR3), (STR4), which were just rotated and placed on top of one another against the reference square 11, are being cut transversely in order to produce relative panels (P) cut to size. During this phase, the relative planes below are in "air cushion" mode or, anyway, in free sliding mode.

During the transverse cutting phase, since the position and sizes of each single cut panel (P) along the support plane 9 is known, the robotic manipulator 10, using the relative arms 10C and the relative properly positioned suction cups 10D, unloads them outside the cutting machine 1, onto the relative pallets (PPL) (figure 8), which were previously prepared, and/or onto roller tracks (not shown).

Figure 8 further shows a pair of strips (STR5) and a strip (STR7) lying on top of a pair of strips (STR6) and on top of a strip (STR8), respectively, waiting to be transferred to the area of the transverse cuts (on the left of the drawing). Even in this case, the zones of the work area (AL) involved in the cutting and in the relative handling of the strips (STR5) (STR6) (STR7) (STR8) up to their waiting zone are activated in "air cushion" mode or, anyway, in free sliding mode. During this wait, the pair of strips (STR6) and the strip (STR8) resting on the support plane 9 can be temporarily held, by means of the "pneumatic vacuum holding" action carried out in the manner described above, on the relative portion of the work area (AL), thus avoiding any accidental movement thereof.

As a matter of fact, an accidental movement would be very problematic for the continuation of the cutting cycle and, in particular, for the subsequent picking up, by the robotic manipulator 10, of the panels (P) and/or the strips (STR) to be picked up in a position different from the predetermined one.

Figure 9 shows the picking up (lifting) of the upper panels (P) of the stack (of two panels (P)), while those directly below are firmly locked by means of the "pneumatic vacuum holding" action, which is properly and temporarily activated in the manner described above.

It should be noted here that, if necessary, the panels (P) (or the strips (STR)) that require a further transverse cutting operation, in addition to the one already carried out, can also be parked in any free zone of the work area (AL) in order to be then retrieved and re-inserted in a new cutting cycle. Even in this case, in the area immediately below the temporary parking zone of the panel (P) to be cut, the "pneumatic vacuum holding" action could be activated so as to avoid uncontrolled movements thereof.

As a matter of fact, the "pneumatic vacuum holding" action can be activated, when necessary, in any zone of the work area (AL) of the cutting machine 1 where the possibility of implementing it is provided.

In particular, in some cutting machines to simplify the pneumatic apparatus 30, the entire zone of feeding plane 8, or of the base work plane 5 or of the support plane 9 downstream of the cutting station 2 can optionally be equipped with one single pneumatic apparatus 30 activated simultaneously in "pneumatic vacuum holding" mode when necessary.

Therefore, to sum up, the electronic control unit is configured to manage and control the cutting machine 1 in each working phase of its and, therefore, the action of cutting, advancing, picking up and/or parking and/or unloading, free sliding and/or holding the panels (P), the strips (STR) or the cut panels (P) is carried out dynamically and instantaneously by the same electronic control unit that controls and manages each single component thereof. In particular, the positions of all the fixed and moving parts in each single phase of the processing cycle are therefore known by the electronic control unit (or by several units connected to it) and, hence, the positions of each single panel (P) on the work area (AL) during the relative cutting, handling and/or unloading cycle are also known.

The electronic control unit is then configured to define the position of the pneumatic apparatus 30 installed on the work area (AL), to acquire and/or to determine the position of the panels (P) or of the stacks of panels (P) to be moved or to be locked on the work area (AL) and optionally to acquire and/or to determine also the dimension of the panels (P) or of the stacks of panels (P) to be locked in position on work area (AL) in order to make a selection of the individual pneumatic devices of the pneumatic apparatus 30 to be activated in "pneumatic vacuum holding mode" when is permitted by its configuration.

The invention also relates to a method for picking up and moving an upper panel (P) of at least one stack of panels (P) during the processing of panels (P) with a flat shape in a cutting machine of the type comprising: at least one cutting station (2) comprising, in turn, at least one processing tool for processing said stack of panels (P); at least one pushing member (SP, SS) for said stack of panels (P); a work area (AL) for supporting at least one stack of panels (P) consisting of a feeding plane 8, of a base plane 5 and of a support plane 9 and comprising pneumatic means (30) configured to generate a "pneumatic vacuum holding" or an "air cushion effect" on the lower surface of at least one panel (P) being processed on the work area (AL); at least one robotic manipulator (10) configured to pick up the at least one upper panel (P) of said at least one stack of panels (P); and an electronic control unit configured for the management and the control of all the members of the cutting machine; the method comprises the following steps carried out in any order:
(f1) defining, by means of an electronic control unit of the cutting machine, the position of pneumatic means (30) available on a work area (AL);
(f2) acquiring or determining the position of at least one stack of panels (P) on the work area (AL);
(f3) locking a bottom panel (P) of said at least one stack of panel (P) in position on work area (AL) by means of a said pneumatic means (30); and
(f4) picking up, substantially simultaneously with step (f3), hence acting in masked time relative to step (f3), by means of a robotic manipulator (10), an upper panel (P) of said at least one stack of panels (P) in order to move it to a position chosen from another zone of the work area (AL) or an expelling and unloading zone on the outside of said work area (AL).

The advantage offered by this innovative solution is represented, first of all, by the significant increase in productivity, since, in cutting machines assisted by a robotic manipulator, the cutting of at least two panels for each cutting cycle is guaranteed in a fast and totally reliable way.

As a matter of fact, returning to the statistics discussed in the study on productions described in the prior art of this description, in forty-eight percent of the typical productions (relating to cycles with two panels (P) and four panels (P) per cutting scheme) productivity has practically doubled, while in a further fourteen percent of the typical production (relating to cycles with three panels per cutting scheme) productivity has increased by sixty-six percent, but, depending on the porosity of the panels and depending on the degree of holding applied, it could also be tripled.

Furthermore, the extreme cost-effectiveness of this solution in relation to the increase in productivity and reliability must also be noted here.

As a matter of fact, thanks to the extreme reliability of the solution suggested herein, the various machine stops due to problems with the accidental and uncontrolled displacement of the panels (P) and/or of the strips (STR) on the work area (AL) of the machine 1 are no longer present, as the problems generated by these displacements are no longer present.

The fact that, in this invention, the action of pneumatically holding at least one lower panel (P) of a stack of panels (P) on the work area (AL) and the action of picking up and lifting at least one upper panel (P) of the same stack of panels (P) by means of a robotic manipulator 10 take place substantially simultaneously, basically in masked time, represents a significant progress from the point of view of an effective, reliable and economic management of the cutting machine 1.

## Claims

1. A cutting machine (1) for cutting panels (P) made of wood, polymers, composite materials, fibre-cement or the like, the machine comprising a base (3); a cutting station (2); at least one pushing device ((SP), (SS)) configured to move at least one panel (P) through said cutting station (2) according to a direction (F2) substantially orthogonal relative to said cutting station (2); a cutting assembly (GRT) mounted in said cutting station (2) and movable in a direction (F1) along a cutting line (LT) substantially perpendicular to the direction (F2) so as to cut said at least one panel (P); a work area (AL) configured to support and move said at least one panel (P); said work area (AL) being defined by a feeding plane (8), by a base work plane (5) and by a support plane (9); and an electronic control unit configured for the management and the control of all the members of the cutting machine (1); cutting machine (1) **characterized in that** said work area (AL) comprises pneumatic means (30); the same pneumatic means (30) being configured to operate in an "air cushion" operating mode to permit and/or facilitate the movement and the positioning of said at least one panel (P) during its relevant cutting cycle along said work area (AL) or in a "pneumatic vacuum holding" operating mode, so as to temporarily lock said at least one panel (P) in position on the work area (AL), while waiting for its following phase of moving, cutting or unloading; and **in that** it comprises at least one robotic manipulator (10) comprising, in turn, pick-up means (10C); said at least one robotic manipulator (10) configured to pick-up and move at least said one panel (P) coming in or out of said cutting station (2) and/or to unload said at least one panel out of the work area (AL).

2. The cutting machine (1) according to claim 1, **characterized in that** the electronic control unit comprises at least one command unit to select the air flow direction to said pneumatic means (30) configured to activate said pneumatic means (30) in an "air cushion mode" where the air flow is coming out of the pneumatic means (30) or to activate said pneumatic means (30) in a "pneumatic vacuum holding" mode where the aspiration air flow is going into the pneumatic means (30).

3. The cutting machine (1) according to the preceding claims 1 or 2, **characterized in that** said pneumatic means (30) comprise at least one pneumatic device ((SET), (SET1), (SET2), (SET3), (SET4), (SETS), (SET6)); said at least one pneumatic device ((SET), (SET1), (SET2), (SET3), (SET4), (SETS), (SET6)) comprising relative sealing means configured to separate it from the other pneumatic devices ((SET), (SET1), (SET2), (SET3), (SET4), (SETS), (SET6)).

4. The cutting machine (1) according to claim 3, **characterized in that** the electronic control unit comprises at least one command unit to select the air flow direction to said pneumatic devices ((SET), (SET1), (SET2), (SET3), (SET4), (SETS), (SET6)) configured for the selective activation of one or more pneumatic devices ((SET), (SET1), (SET2), (SET3), (SET4), (SETS), (SET6)) in "pneumatic vacuum holding" mode and one or more pneumatic devices ((SET), (SET1), (SET2), (SET3), (SET4), (SETS), (SET6)) in "air cushion" mode.

5. The cutting machine (1) according to any one of the claims 3 or 4, **characterized in that** at least one pneumatic device ((SET), (SET1), (SET2), (SET3), (SET4), (SETS), (SET6)) is provided with a plurality of nozzles (UG).

6. The cutting machine (1) according to any one of the preceding claims, **characterized in that** the electronic control unit is configured to define the position of said pneumatic means (30) on the work area (AL) and to acquire or to determine the position of said at least one panel (P) to lock in position on the work area (AL).

7. The cutting machine (1) according to claim 6, **characterized in that** the electronic control unit is configured for the activation of said pneumatic means (30) in a "pneumatic vacuum holding" operating mode based on the position of said pneumatic means (30) in the work area (AL) and/or based on the position that said at least one panel (P) to be locked in position occupies on said work area (AL).

8. The cutting machine (1) according to claim 7, **characterized in that** the electronic control unit is configured for the activation of said pneumatic means (30) in a "pneumatic vacuum holding" operating mode based also on the dimensions of said at least one panel (P) to be locked in position on work area (AL).

9. A method for picking up and moving an upper panel (P) of at least one stack of panels (P) during the processing of panels (P) with a flat shape; the method being **characterized in that** it is suited to be implemented in a cutting machine of the type comprising: at least one cutting station (2) comprising, in turn, at least one processing tool for processing said stack of panels (P); at least one pushing mean (SP, SS) for said at least one stack of panels (P); a work plane (AL) for supporting at least one stack of panels (P) and comprising pneumatic means (30) configured to generate a "pneumatic vacuum holding" on the lower surface of at least one panel (P) being processed on the work area (AL); at least one robotic manipulator (10) configured to pick up the at least one upper panel (P) of said at least one stack of panels (P); and an electronic control unit configured for the management and the control of all the members of the cutting machine; and **in that** it comprises the following steps carried out in any order:
(f1) defining, by means of an electronic control unit of the cutting machine, the position of pneumatic means (30) available on a work area (AL);
(f2) acquiring or determining the position of at least one stack of panels (P) on the work area (AL);
(f3) locking a bottom panel (P) of said at least one stack of panel (P) in position on the work area (AL) by means of a said pneumatic means (30); and
(f4) picking up, substantially simultaneously with step (f3), hence acting in masked time relative to step (f3), by means of a robotic manipulator (10), an upper panel (P) of said at least one stack of panels (P) in order to move it to a position chosen from another zone of the work area (AL) or an expelling and unloading zone on the outside of said work area (AL).
